# EUROPEAN PATENT APPLICATION

(11) **EP 4 845 005 A1**
(43) Date of publication of application: **25.11.2026**
(21) Application number: 25178144.9
(22) Date of filing: 22.05.2025
(51) Int. Cl.: H02M 1/00, H02M 1/42, H02M 7/48, H02M 7/525

(54) **A MOTOR DRIVE WITH INTEGRATED PFC**

(71) Applicant: Mirka Ltd., 66850 Jeppo (FI)
(72) Inventor: Nordström, Caj, 66850 Jeppo (FI); Södergård, Tomas, 66850 Jeppo (FI); Westerlund, Jan-Anders, 66850 Jeppo (FI)
(74) Representative: Hoffmann Eitle

(57) **Abstract**

A controller for a powered device that comprises an electric power supply module, a rectifier, a converter, a motor drive and a motor, the electric power supply module being configured to receive an alternating current, AC, voltage; the rectifier being configured to rectify the AC voltage; the converter comprising a boost converter and a capacitor connected at an output of the boost converter, the boost converter being configured to control a first voltage across the capacitor; and the motor drive being connected in parallel to the capacitor and configured to supply a current to drive the motor; wherein the controller is configured to: determine the first voltage and control the boost converter to boost the rectified voltage when the first voltage is less than a first threshold voltage, and determine a current waveform to be supplied to the motor, based on a phase of the AC voltage, and control the motor drive to supply the current with the determined waveform to the motor. A powered device is also provided.

## Description

### Technical field

The present invention relates to power factor correction in an electric motor drive and in particular, to a controller and a powered device.

### Background

An electric power source is used to power a motor drive in a powered device, which in turn controls the operation of an electric motor of the powered device. A power factor correction (PFC) is implemented in such powered devices for various reasons, including improving the energy efficiency, reducing current harmonics that may be fed back to the power source (e.g. to mains voltage), etc.

Typically, a powered device comprises a circuit for the sole purpose of obtaining PFC, and the control of the PFC circuit, the motor drive and the other elements of the device is carried out in an integrated manner.

However, having an additional circuit causes the powered device to be bulkier, and the control of the overall circuit becomes more complex.

### Summary

The inventors identified a way to obtain power factor correction in a powered device whilst simplifying the control of the converter.

According to a first example aspect herein, there is provided a controller for a powered device that comprises an electric power supply module, a rectifier, a converter, a motor drive and a motor,
the electric power supply module being configured to receive an alternating current, AC, voltage;
the rectifier being configured to rectify the AC voltage;
the converter comprising a boost converter and a capacitor connected at an output of the boost converter, the boost converter being configured to control a first voltage across the capacitor; and
the motor drive being connected in parallel to the capacitor and configured to supply a current to drive the motor;
wherein the controller is configured to:
   determine the first voltage and control the boost converter to boost the rectified voltage when the first voltage is less than a first threshold voltage, and
   determine a current waveform to be supplied to the motor, based on a phase of the AC voltage, and control the motor drive to supply the current with the determined waveform to the motor.

The powered device is any device that can be powered to operate with electric power, in particular AC electric power. Preferably, the powered device is a type of device for carrying out an operation requiring a high power output. For example, the powered device may be a power tool (e.g. an electric sander, a drill, a saw), a dust extractor, etc. The powered device may be of any suitable form, such as a portable (e.g. hand-held) device, a mountable device that can be mounted (or otherwise fixed, temporarily or permanently) on a workstation or a wall, a device having both portable and mounted components, etc.

The electric power supply module is couplable to an electric power supply (or electric power source) that is external to the powered device, such as a mains voltage or another power source providing an AC current. Accordingly, the electric power supply module of the powered device may comprise an electrical connection to a socket, and may in some cases include a number of electrical elements to control (e.g. transform/convert/filter) the received AC voltage.

The boost converter may be any suitable type of converter that increases a voltage value, and may be referred to as a step-up converter. A converter may also be referred to as a topology, a stage, a circuit, etc. The converter comprising the boost converter and the capacitor may thus output a first voltage across the capacitor based on the rectified AC voltage that is output by the rectifier (that is, by converting the rectified voltage). The voltage over the capacitor may be determined (e.g. measured or calculated) and when it is below a threshold voltage, the boost converter boosts the rectified AC voltage, thus increasing the first voltage.

The motor drive is used as a step-down (or buck) converter, and controls the current being supplied to the motor. The motor drive controls the current supplied to the motor, so that a phase of the current drawn from the electric power supply module matches the phase of the received AC voltage as much as possible, thus improving the power factor of the circuit.

The motor (or electric motor) may be any suitable type of motor such as a universal motor, a DC motor, a brushless DC motor, an induction machine with a variable-frequency drive, etc.

As used herein, the expression "higher than" or the expression "lower than" may also include the case "equal to". In other words, "higher than" may in some cases be interpreted to mean "higher than or equal to", or "lower than" may be interpreted to mean "lower than or equal to".

The inventors identified that certain operations of powered devices may achieve a desired result even if the torque produced by the motor varies during an operation, as the result of the operation depends on the average torque provided during the operation (rather that the instantaneous torque). The inventors further identified this can be used to simplify the control of the electric circuit (i.e. the circuit including the rectifier, the converter, the motor drive and the motor, also referred to herein as the system) whilst obtaining a high power factor. By way of non-limiting example, a sanding operation would typically require multiple passages of a rotating sanding element on the surface being sanded, and the sanding result obtained is based on the average torque being generated, rather than the torque at a specific instant. The present invention thus controls the current waveform in the motor (and thus the torque being produced) to obtain a high power factor, whilst simplifying the control of the system.

The value of any capacitor in parallel with the motor (e.g. the capacitor at the output of the boost converter, across which the first voltage is measured) may be limited to reduce any non-resistive load added to the electric power source. Accordingly, the current flowing through the capacitor of the converter may be considered to be negligible (at least in comparison to the current flowing through the motor) so that the current input into the boost converter may be assumed to be approximately equal to the current flowing through the motor. Thus, by controlling the waveform of the current output by the motor drive, the system to can be made to become substantially a resistive load for the electric power source (e.g. the grid).

In this controller, the boost converter and the motor drive are used to carry out power factor correction, avoiding the need for a separate PFC circuit and thus simplifying the system. Additionally, the boost converter and the motor drive are controlled independently of each other, i.e. using separate control loops and having separate electrical characteristics of the system as control targets (the first voltage across the capacitor for the boost converter, and the current waveform to be supplied to the motor for the motor drive), where each of the separate control loops can be performed regardless of whether the other one is being performed, and in particular do not require any data from the other loop to operate. This simplifies the control of the system.

The independent and separate control referred to herein may involve one or both of the following:
- The controller may be configured to determine the current waveform independently of the control of the first voltage, and/or
- the controller may be configured to determine the first voltage based on the AC voltage and the threshold voltage only, preferably based on (a comparison of) an amplitude of the AC voltage and the threshold voltage only.

By determining the first voltage, it is possible to determine how to control the boost converter, and in particular control the boost converter to boost the voltage only when the first voltage is below a threshold.

Preferably, the controller is configured to determine the current waveform based on only a combination of one or more of: a phase of the AC voltage, an amplitude of the first voltage, an amplitude of the rectified AC voltage, and a constant value.

Accordingly, no signal controlling the boost converter (or other output of the control loop for controlling the converter) needs to be used when determining the current waveform or when controlling the motor drive, although the control of the boost converter and the determination of the current waveform may be based in part on a same value, such as for example the amplitude of the first voltage.

As explained herein, the controller may be defined as controlling two separate parts of the circuit, namely the boost converter and the motor drive. As such, the controller may be configured to generate at least one first control signal to control the boost converter, and at least one second control signal to control the motor drive. The at least one first control signal may control a state of at least one first switching element (e.g. MOSFET) in the boost converter, and the at least one second control signal may control a state of at least one second switching element in the motor drive.

Preferably, the controller is configured to control the converter using a different method depending on whether the first voltage is lower than the first threshold voltage or the first voltage is higher than the first threshold voltage.

As used herein, the controller "using a different method" can be understood to mean that the controller follows a different logic or algorithm in each case, and/or that different components of the controller are operating in each case.

In some embodiments, a comparison between the first voltage and the first threshold voltage may indicate which of the two methods should be used to control the converter.

Preferably, the boost converter comprises a switch, and the controller is configured to control the switch to remain open when the first voltage is equal to or greater than the first threshold voltage.

The switch may be any suitable element that can be switched between a closed state (also referred to the switch being ON) forming an electrical connection, and an open state (also referred to the switch being OFF) breaking the electrical connection. The switch may be any type of switchable element for example a transistor, such as Field-effect transistor (FET) (e.g. Si MOSFET, GaN MOSFET, SiC MOSFET, etc.), Bipolar junction transistor (BJT), insulated-gate bipolar transistor (IGBT), thyristor, or other known types of switches.

By allowing the switch to remain open, electrical power losses in the boost converter may be reduced, as no current would flow through the open switch.

Preferably, the controller is configured to control the boost converter to boost the rectified voltage when the rectified voltage is lower than a second threshold voltage.

Because the first voltage is obtained from the rectified voltage, it is possible to determine whether the first voltage would be below the first threshold voltage based on the rectified voltage. Accordingly, the control of the boost converter may be based on the rectified voltage only, which may be more easily predicted than the first voltage.

In other words, it is possible to determine the first voltage based on the rectified voltage. Thus, controlling the boost converter to boost the rectified voltage when the rectified voltage is lower than a second threshold voltage can be considered akin to boosting the rectified voltage when the first voltage is lower than a first threshold voltage.

Preferably, the controller is configured to control the boost converter not to boost the rectified voltage when the first voltage is above the first threshold voltage and/or when the rectified voltage is above the second threshold voltage.

Accordingly, the boost converter can be deactivated when boosting the voltage is unnecessary, thus reducing the electrical power losses (e.g. switching losses) in the converter.

Preferably, the controller is configured to determine the current waveform using a different method depending on whether the rectified voltage is lower than a second threshold voltage or the rectified voltage is equal to or higher than the second threshold voltage.

As with the control of the boost converter, a comparison between the rectified voltage and the second threshold voltage may be used to indicate which of the two method should be used to determine the current waveform.

Even in cases where, depending on whether the rectified voltage is lower or higher than the second threshold voltage, the controller is configured to use different methods to control the boost converter and/or to determine the current waveform, the two control loops are independent and separate from each other.

The same second threshold voltage may be used in the comparison to the rectified voltage when determining whether to control the boost converter to boost the rectified voltage and when determining the method to use to determine the current waveform.

Preferably, the second threshold voltage is determined based on the first threshold voltage.

Accordingly, the converter may be switched from an operation where the rectified voltage needs to be boosted (when the rectified voltage is lower than the first voltage), and when no boosting of the voltage is necessary.

Preferably, the second threshold voltage is based on a constant voltage value.

For example, the second threshold voltage may be a constant voltage value, or it may be calculated based on the constant voltage value.

In such cases, it is possible, knowing the amplitude of the AC voltage received by the electrical power supply module and thus of the rectified voltage, to predetermine (i.e. before the operation) when the rectified voltage would be higher than the second threshold voltage, and in particular in which part of the cycle of the AC voltage the rectified voltage would be higher than the second threshold voltage and which part of the cycle the rectified voltage is lower than the second threshold voltage, which may be predetermined.

This help simplify the controller, in particular in cases where the controller is configured to use different methods to control the boost converter and/or to determine the current waveform depending on whether the rectified voltage is lower than or higher than the second threshold voltage.

Preferably, the controller is configured to determine a phase for the current waveform that is substantially equal to the phase of the AC voltage.

Accordingly, the motor would represent a resistive load. Because the current flowing through elements of the system that are in parallel with the motor (such as the capacitor at the output of the boost converter) can be considered to be negligible in comparison to the current flowing in the motor, the system as a whole can be considered to approximate a resistive load, thus achieving a high power factor.

Preferably, the controller is configured to determine the phase for the current waveform to have a phase difference with the AC voltage less than a predetermined threshold.

Accordingly, when approximating the current flowing through the motor as the current flowing through the system, the power factor of the system can be kept at a certain level defined by the predetermined threshold.

Preferably the predetermined threshold is based on at least one of a capacitance value of the capacitor, a minimum power to be output by the motor, and a limit for a current harmonic.

Any of these three values may contribute to determining a power factor that may be obtained in a given set-up. In particular, a limit for the current harmonic (or for each of a plurality of current harmonics, such as the second current harmonic and higher harmonics), may be defined. Such limit may be predetermined, for example by a standard, to reduce interferences to the source of the AC voltage (e.g. the mains voltage), such as the IEC 61000-3-2 or IEC 61000-3-12 or other corresponding standards. The power factor to be obtained, and thus the threshold for the phase difference, may be determined in order to satisfy such limit for the current harmonic.

As the capacitance value of the capacitor is known, the current that will flow through the capacitors during operation of the motor can be compensated by adjusting the current supplied to the motor (i.e. by decreasing the current supplied to the motor by an amount proportional to, or equal to, the current estimated to "flow through" the capacitor, or vice-versa). Accordingly, the phase of the total current drawn from the AC voltage source, including the sum of the current supplied to the motor and the current flowing through the capacitor, can remain as close to the phase of the AC voltage source as possible, thus improving the power factor.

The power output by the motor depends on the current flowing through its phases (and thus the current supplied to the motor). Accordingly, if a minimum power desired to be output by the motor is defined, this has a corresponding minimum current level to be supplied to the motor. In such cases, if any compensation related to the current flowing through the capacitor is made, the compensation can take into account the minimum current level that corresponds to the minimum power desired to be output by the motor. In other words, any current compensation can be limited to maintain the current supplied to the motor above (or equal to) the minimum current level. As used in this context, the term minimum power is a reference to an average (e.g. RMS) or other non-instantaneous power (in the sense that it measured over a period of time).

Preferably the predetermined threshold is 20° or less.

Accordingly, the power factor may be maintained above 93% (approximatively equal to cos 20°).

Preferably, the controller is configured to determine the current waveform based on a predetermined efficiency of the boost converter.

Accordingly, any losses in the boost (i.e. step-up) converter (which have typically an efficiency in the range of 80% to 95%) can be compensated by adjusting the current supplied to the motor.

Preferably, the controller is configured to determine the current waveform based on the rectified voltage and the first voltage.

Preferably, the controller is configured to determine an amplitude for the current waveform to be supplied based on a ratio of the rectified voltage to the first voltage.

As the rectified voltage changes in accordance with the AC voltage, the ratio would indicate any change in the rectified voltage. Thus the current waveform can be made to vary in accordance with the AC voltage as well, which would improve the power factor of the system.

Preferably, the controller is configured to determine the amplitude for the current waveform to be proportional to the rectified voltage when the first voltage is substantially equal to the rectified voltage.

The resulting current waveform would therefore vary in accordance with the rectified voltage.

Preferably, the controller is configured to determine the amplitude I for the current waveform based on the equation: $I = K ⋅ V \left(C2\right) ⋅ V \left(C2\right) / V \left(C1\right)$ where V(C2) is the rectified voltage, V(C1) is the first voltage, and K is a constant determined based on a desired root mean square value or a peak value for the current to be supplied to the motor.

Preferably, the constant K is based on a value of power or current required to obtain a desired root mean square (RMS) current in the motor. More preferably, K is based on a ratio of a peak value I_peak of the current I to be supplied to the motor and a peak value V(C2)_peak of the rectified voltage, i.e. K = I_peak/V(C2)_peak. As I_peak is equal to I_rms (the RMS current to be supplied to the motor) multiplied by the square root of 2, this corresponds to $K = K = \sqrt{2} ⋅ I _ rms / V \left(C2\right) _ peak$*,* such that the constant K may be based on a desired RMS or peak value for the current I.

Preferably, the converter further comprises a buck converter connected between the capacitor and the motor drive, and the controller is configured to operate the buck converter to convert the first voltage to a second voltage, wherein the motor drive is configured to supply the current to the motor based on the second voltage.

Preferably, the electric motor comprises a plurality of phases, and wherein the controller is configured to determine a current waveform to be supplied to at least one phase.

Preferably the controller is configured to determine a respective current waveform for each phase of the electric motor.

Accordingly, each phase of the motor may be controlled whilst ensuring a high power factor is obtained.

According to a second example aspect herein, there is provided a circuit for controlling a motor, the circuit comprising an electric power supply module, a rectifier, a converter, a motor drive, and the controller according to the first example aspect herein.

Preferably, the electric power supply module comprises connection means configured to connect to an external electric power source.

Preferably the connection means comprise a plug for connection to an external AC power source.

Preferably, the external AC power source is a mains or grid voltage power source.

Preferably, the circuit further comprises a bypass circuit connected in parallel to the boost converter, wherein the bypass circuit comprises at least one of a diode and an active semiconductor element for allowing electric current flowing from the rectifier towards the motor drive to bypass the boost converter when the first voltage is higher than the threshold voltage.

Accordingly, the current going through the boost converter may be reduced significantly during that part of the cycle, thus reducing electrical power losses from the boost converter (in particular from any inductor in the boost converter).

Preferably, the active semiconductor element is a switch or a transistor. The switch or transistor may be such as Field-effect transistor (FET) (e.g. Si MOSFET, GaN MOSFET, SiC MOSFET, etc.), Bipolar junction transistor (BJT), insulated-gate bipolar transistor (IGBT), thyristor.

Preferably, the bypass circuit comprises a plurality of branches connected in parallel to each other, wherein each of the plurality of branches comprises at least one of a diode and an active semiconductor element.

Each parallel branch may be used to transmit electric motor to the motor drive bypassing the step-up converter. Accordingly, the electric power may be transmitted to the motor drive more efficiently, when the boost converter is not operating, as the amplitude of the current flowing through each parallel branch is reduced.

According to a third example aspect herein, there is provided a powered device comprising the circuit according to the second example aspect, and a motor connected to the motor drive of the circuit, wherein the circuit is configured to supply current to the motor with the determined current waveform

According to a fourth example aspect herein, there is provided a method for controlling a powered device, the powered device comprising an electric power supply module for receiving an alternating current, AC voltage, a rectifier for rectifying the AC voltage, a converter comprising a boost converter, a motor drive, and a motor, the method comprising:
determining a first voltage across a capacitor connected at an output of the boost converter, and controlling the boost converter to boost the rectified voltage when the first voltage is less than a threshold voltage, and
determining a current waveform to be supplied to the motor, based on a phase of the AC voltage, and controlling the motor drive to supply the current with the determined waveform to the motor.

Preferably, the method is for controlling a powered device according to the second example aspect herein.

Preferably, determining the first voltage and controlling the boost converter, and determining the current waveform and controlling the motor drive are performed separately and/or independently of each other.

According to a fifth example aspect herein, there is provided a computer program comprising instructions which, when the instructions are executed by one or more processor, cause the one or more processor to carry out a method according to the third example aspect herein.

According to a sixth example aspect herein, there is provided a computer-readable medium, (preferably a non-transitory computer-readable medium) storing the computer program according to the fourth example aspect herein.

### Brief description of the drawings

Embodiments of the present invention, which are presented for better understanding the inventive concepts, but which are not to be seen as limiting the invention, will now be described with reference to the figures in which:
Figure 1 shows a schematic diagram illustrating an example of an electric circuit in a powered device in example embodiments;
Figures 2A and 2B show a schematic diagram illustrating an example of a controller and a converter in example embodiments;
Figures 3A-3C show graphical representations illustrating electrical quantities of the electric circuit during an operation of the powered device in example embodiments;
Figure 4 shows a schematic diagram illustrating an example of a controller, a motor drive and a motor in example embodiments;
Figure 5 shows operations performed for controlling a powered device in example implementations;
Figure 6A shows a schematic diagram illustrating a simulated example of an electrical circuit according to example embodiments;
Figures 6B to 6F show waveforms of electrical quantities of the simulated electrical circuit shown on Figure 6A;
Figures 6G to 6K show the waveforms of Figures 6B to 6F during a first restricted time period;
Figures 6L to 6P show the waveforms of Figures 6B to 6F during a second restricted time period;
Figure 7 shows a schematic diagram illustrating an example of a processing device that may be used to implement the controller in example embodiments.

### Detailed description

Although example embodiments will be described below, it will be evident that various modifications may be made to these example embodiments without departing from the broader spirit and scope of the invention. Accordingly, the following description and the accompanying drawings are to be regarded as illustrative rather than restrictive.

In the following description and in the accompanying figures, numerous details are set forth in order to provide an understanding of various example embodiments. However, it will be evident to those skilled in the art that embodiments may be practiced without these details.

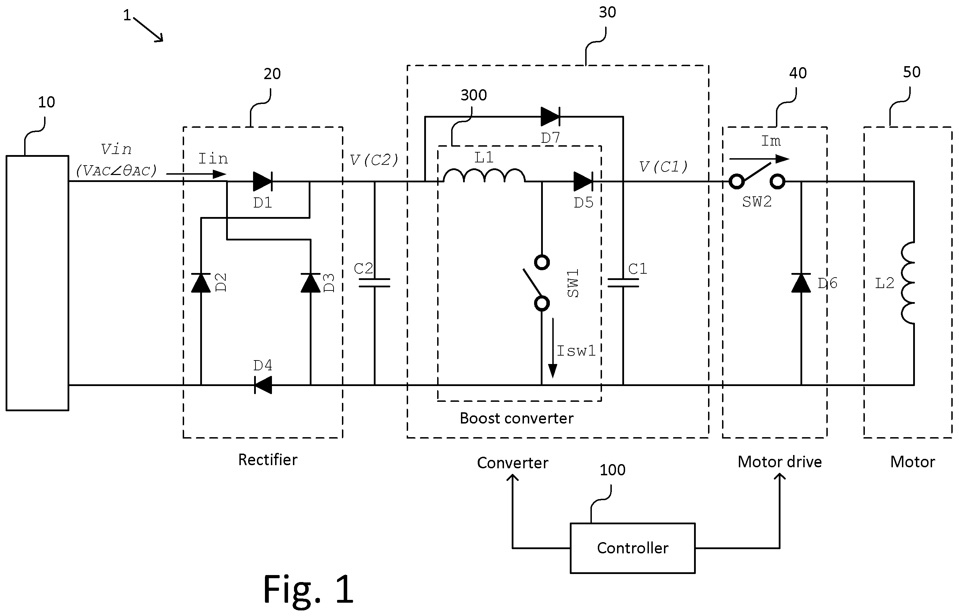

Figure 1 shows an example of an electric circuit in a powered device according to example embodiments.

The powered device may be, for example, an electric sanding machine, an electric grinding machine or a dust extractor (or an electric sanding/grinding machine with an embedded dust extractor). However, it would be understood that the present invention is not limited in this aspect, and the powered device may be any other suitable type of device disclosed herein or that would be apparent to the skilled person based on the present disclosure, in particular, it may be any suitable type of power tools.

The electric circuit 1 comprises an electric power supply module 10, a rectifier 20, a converter 30, a motor drive 40 and a motor 50, with a controller 100 that controls the operation of various components of the electric circuit 1.

The electric power supply module 10 is couplable to an electric power supply (not shown) that is external to the powered device, to receive an AC power from the external source, and to supply an AC power with a voltage Vin (having an amplitude Vac and a phase θac) to the rectifier 20. The AC current supplied by the electric power supply module 10 is indicated as lin. The electric power supply module 10 may be coupled to any suitable AC power source, such as a mains voltage.

In the example shown on Figure 1, the electric power supply module 10 comprises a plug to be inserted into a corresponding mains voltage socket (e.g. 230V at 50Hz) socket, and supplies an AC voltage Vin of 230V at 50Hz to the rectifier 20. In this case, improving the power factor also reduces the current harmonics being fed back to the mains voltage. However, it would be understood that the electric power supply module 10 may be coupled to any other suitable type of AC power supply, which may be comprised in the powered device (such as a battery and an DC-AC converter).

The rectifier 20 is configured to rectify the AC voltage Vin and output a voltage to the converter 30.

In the example shown on Figure 1, the rectifier 20 comprises a full-wave rectifying diode bridge including diodes D1, D2, D3 and D4. Details of the operation of the diode bridge which would become apparent to the skilled person are omitted here, for brevity. It would be understood that the rectifier 20 is a non-limiting example, and that any suitable type of rectifier (e.g. full-wave or half-wave) may be used instead.

A capacitor C2 is provided at the output of the rectifier 20, between the rectifier 20 and the converter 30, and specifically connected between the output terminals of the rectifier 20. The rectified voltage that is output by the rectifier 20 to converter 30, is also referred to as V(C2) herein.

The converter 30 receives the rectified voltage V(C2) and converts this into a form that is suitable for the motor drive 40. The converter 30 comprises a boost converter 300 and a capacitor C1.

The boost converter 300 is configured to increase an amplitude of the rectified voltage V(C2) to output a voltage to the capacitor C1 when necessary. In the example of Figure 1, the boost converter 300 comprises an inductor L1 and a switch SW1 connected in series between the output terminals of the rectifier 20, in parallel to the capacitor C2. The boost converter 300 also comprises a diode D5 having its anode connected to the terminal common to the inductor L1 and the switch SW1, and its cathode connected to one terminal of the capacitor C1, the other terminal of the capacitor C1 being connected to the same output terminal of the rectifier 20 as the switch SW1. It would be understood that any other suitable configuration of the converter 30 and/or the boost converter 300 may be used instead, as the present invention is not limited in this aspect.

The capacitor C1 may also be referred to as a bus capacitor, because the motor drive 40 uses a voltage across the terminals of the capacitor C1 (i.e. V(C1), also referred to as bus voltage or first voltage) to supply a current Im to motor 50.

The converter 30 also comprises a bypass circuit in parallel to the boost converter 300. As will be explained in the following, the bypass circuit allows electric current flowing from the rectifier 20 towards the motor drive 40 to bypass the boost converter 300 when the first voltage V(C1) is higher than the threshold voltage, thus reducing any accumulation of charges in the boost converter 300 (and specifically in the inductor L1).

In the example of Figure 1, the bypass circuit comprises a diode D7 that is forward biased from the input terminal of the boost converter 300 to the output terminal of the boost converter 300, i.e. it has its anode connected to the terminal that is common to the rectifier 20, the capacitor 20 and the inductor L1 and its cathode connected to the terminal that is common to the diode D5, the capacitor C1 and the motor drive 40.

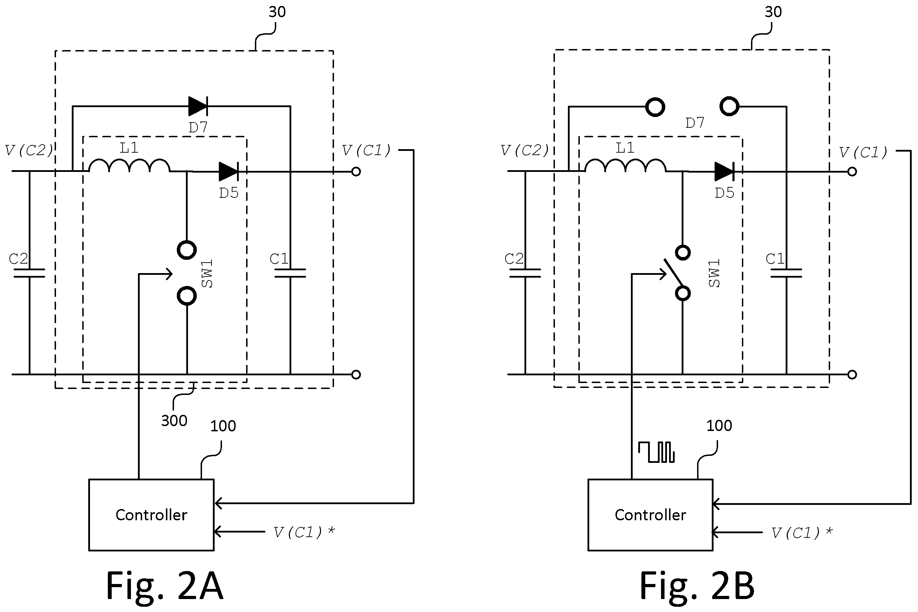

Details of an exemplary operation of the converter 30 will be described with reference to Figures 2A-3B below.

The motor drive 40 comprises at least one switch (e.g. a switching element, such as a MOSFET), to control the current Im supplied to the phase winding(s) L2 of the motor 50. In particular, the motor drive 40 may comprise a respective set of one or more switches for each phase of the motor. Details of the motor drive 40 that will become apparent to the skilled person will be omitted here, for brevity.

The motor 50 may be of any suitable type, with any number of phases. When operated, the motor 50 may cause an attachment coupled to a shaft of the motor to move or rotate. By way of non-limiting example, the motor 50 may be a three-phase BLDC motor to which a grinding disc is attached to be rotated during a sanding or grinding operation.

Referring now to Figures 2A and 2B, an example of a control of the converter 30 will be explained.

The controller 100 controls the converter 30 to ensure that the first voltage V(C1) is sufficiently high for the motor drive 40 to supply a desired current waveform to the motor 50.

It would be understood that the process described with reference to Figures 2A and 2B may be repeatedly performed, at a predetermined frequency or continuously. Thus, references to measured quantities of the circuit (e.g. the rectified voltage V(C2) or the first voltage V(C1)) would be understood to normally refer to instantaneous values, unless an average or RMS value is indicated.

In the example shown on Figures 2A and 2B, the controller 100 is configured to control the converter 30 using a different method depending on whether the first voltage V(C1) is higher than a first threshold voltage V(C1)* (Figure 2A) or the first voltage V(C1) is lower than the first threshold voltage V(C1)* (Figure 2B). That is, a first method shown on Figure 2A causes the controller 100 to control the converter 30 to act as a passive relay of the voltage, and a second method shown on Figure 2B causes the controller 100 to control the converter 30 to act as a boost converter based on a comparison of the first voltage V(C1) and the first threshold voltage V(C1)*. The different methods may be implemented by providing separate components (software and/or hardware) to perform each method, and switching between which component is activated based on the comparison of the first voltage V(C1) and the first threshold voltage V(C1)*.

In other cases, the controller can use a single method to control the converter 30 regardless of whether the first voltage V(C1) is higher than the first threshold voltage V(C1)* or not.

The controller 100 obtains at least (an amplitude of) the first voltage V(C1), and the first threshold voltage V(C1)*, to compare the first voltage V(C1) and the first threshold voltage V(C1)*.

The amplitude of the first voltage V(C1) may be obtained based on a voltage sensor connected across the capacitor C1, and first threshold voltage V(C1)* may be obtained from a storage location on a memory of the powered device or it may be indicated by an input of a user of the powered device (for example, via a button on the powered device) used to indicates a desired operation of the powered device.

When the first voltage V(C1) is higher than or equal to the first threshold voltage V(C1)*, the situation in Figure 2A occurs: the controller 100 controls the boost converter 300 of the converter 30 to be turned OFF. AS a result, the boost converter 300 is passive and bypassed by the diode D7 of the bypass circuit, i.e. substantially all the current flows through the diode D7 instead of the boost converter 300. The first voltage V(C1) at the output of the converter 30 is substantially equal to the rectified voltage V(C2) at the input of the converter 30.

When the first voltage V(C1) is lower than the first threshold voltage V(C1)*, the situation in Figure 2B occurs: the controller 100 controls the boost converter 300 to boost the rectified voltage V(C2), so that the first voltage V(C1) becomes higher than the rectified voltage V(C2). As a result, the diode D7 in the bypass circuit is reverse biased and acts as an open circuit. It would be understood that any suitable method to control the converter 300 may be used, for example by generating a signal based on the result of the comparison between the first voltage V(C1) and the first threshold voltage V(C1)* (i.e. an error value), such as by using a PWM signal generator, and to control the state of the switch SW1 using an output of the PWM signal generator. Details of the control of the boost converter 300 which would become apparent to the skilled person are omitted here, for brevity.

The first threshold voltage V(C1)* may be determined based on an electric power value that should be provided to the motor 50 for a given operation, such as an average power value (e.g. an RMS power value), as explained below. The first threshold voltage V(C1)* may therefore be a predetermined value, for example in case of the electric power value is known prior to the operation. The first threshold voltage V(C1)* may be a constant value. In some cases, the powered device may be configured to selectively operate at a plurality of available levels for an operation (for example a variable rotation speed or an adjustable level of torque to be provided), or may be configured to selectively operate according to one of a plurality of different operations. In such cases, a respective value for the first threshold voltage corresponding to the desired operation and/or desired level of operation may be used.

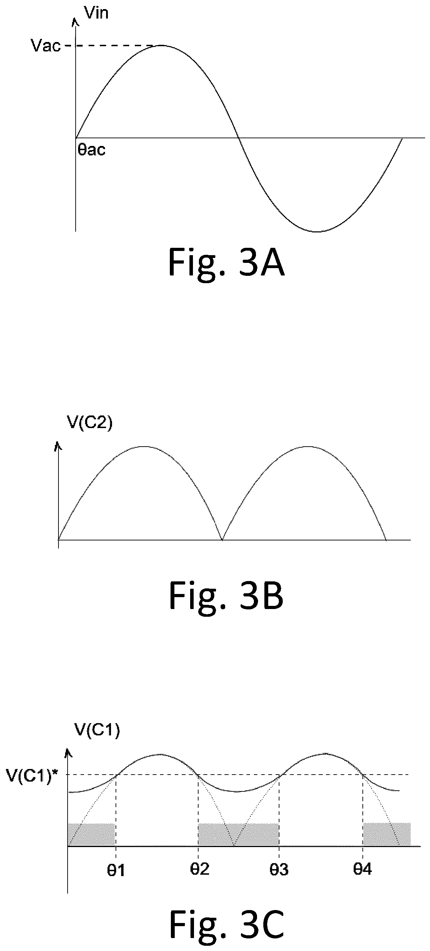

Referring now to Figures 3A to 3C, examples of the voltage at various stages of the electric circuit during an operation of the powered device will now be described.

Figure 3A shows one cycle of the AC voltage Vin supplied by the electric power supply module 10, which has an amplitude Vac, and a frequency defining a cycle. The graph on Figure 3A is adjusted so the phase θac corresponds to the origin along the x-axis. For simplicity, Figures 3A shows a single cycle of θ=0 to 2π, omitting the frequency.

Figure 3B shows the rectified voltage V(C2) output by the rectifier 20, namely a full wave rectified version of the voltage Vin, with an amplitude substantially the same as Vin.

Figure 3C shows the first voltage V(C1) output by the converter 30, and specifically showing that the rectified voltage V(C2) is boosted by the boost converter 300 when the first voltage is less than a threshold voltage V(C1)*. For reference, the rectified voltage V(C2) is also shown on Figure 3C as a dotted curve line.

The cycle defined by the AC voltage can be separated into two situations: when the first voltage V(C1) is equal to or higher than the threshold voltage, and when the rectified voltage V(C2) is lower than the threshold voltage.

When the rectified voltage V(C2) is equal to or higher than the threshold voltage V(C1)* (corresponding to the situation of Figure 2A), the converter 30 is controlled not to boost the rectified voltage V(C2), thus the first voltage V(C1) is substantially equal to the rectified voltage V(C2). On Figure 3C, this corresponds to the angles from θ1 to θ2, and from θ3 to θ4.

On the other hand, when the rectified voltage V(C2) is lower than the threshold voltage V(C1)* (the situation of Figure 2B), the converter 30 is controlled to boost the rectified voltage V(C2), so the first voltage V(C1) is higher than the rectified voltage V(C2), that is, before θ1, between θ2 and θ3, and after θ4 on Figure 3C.

As a result, the motor drive 40 is supplied with a first voltage V(C1) that is sufficiently high to power the motor 50.

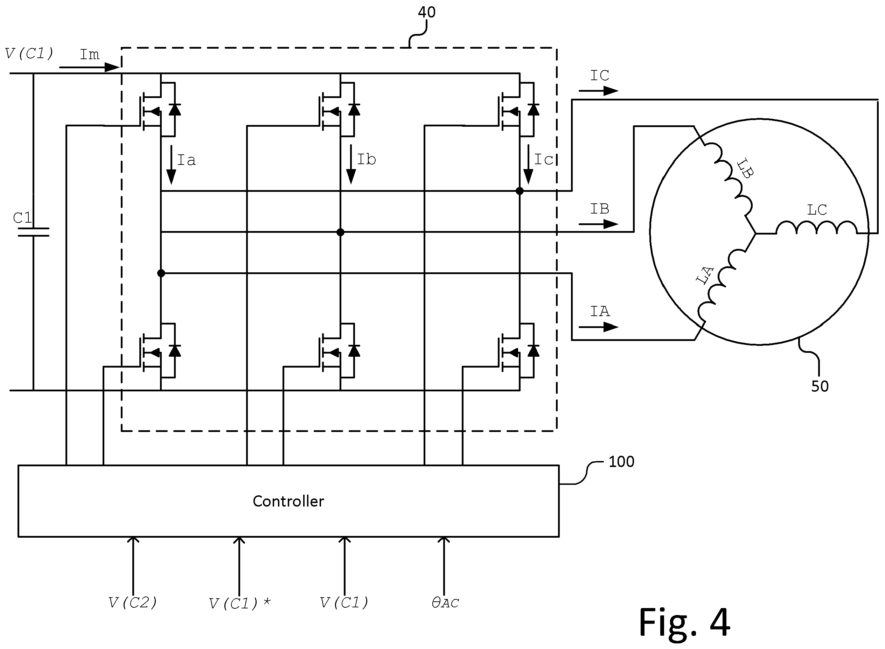

Referring now to Figure 4, an example of a control of the motor drive 40 will be explained. In the example of Figure 4, the motor 50 is a three-phase motor (e.g. a asynchronous, synchronous or BLDC motor), and the motor drive 40 comprises three pairs of switches, each for a respective phase of the motor 50.

However, it would be understood that the present invention is not limited in this aspect, and the motor 50 may have any suitable number of phases (one or more), and the motor drive 40 may have any suitable number of switches. Although the motor drive 40 preferably comprises a respective set of switches (e.g. a single switch, a pair of switches, or three or more switches) for each phase of the motor 50, the number of switches need not correspond to the number of phases of the motor 50 (or a multiple thereof).

As with Figures 2A and 2B, it would be understood that the process described with reference to Figure 4 may be repeatedly performed, at a predetermined frequency or continuously, and that references to measured quantities of the circuit (e.g. the rectified voltage V(C2) or the first voltage V(C1)) would be understood to normally refer to instantaneous values, unless an average or RMS value is indicated.

In the example of Figure 4, the controller 100 obtains at least an amplitude of the rectified voltage V(C2), the first threshold voltage V(C1)*, an amplitude of the first voltage V(C1) and a phase θac of the AC voltage Vin.

Details of how the controller 100 may obtain the first voltage V(C1) and the first threshold voltage V(C1)* have been described with reference to Figures 2A and 2B above and will be omitted here for brevity. It would be understood that the rectified voltage V(C2) may be obtained in a similar way as the first voltage V(C1), such as by using a voltage sensor across the capacitor C2. The controller 100 may obtain the phase θac from an AC phase sensor, for example comprised in the electric power supply module 10, that measures a phase of the AC signal received by the electric power supply module 10.

The controller 100 determines a waveform for the current Im to be supplied to the motor 50 based on the phase θac of the AC voltage. For example, the controller 100 determines a current waveform Im to have a periodicity and a phase that correspond to the periodicity and the phase θac of the AC voltage. The controller 100 then controls the motor drive 40 to supply the current Im with the determined waveform to the motor 50.

A specific example for determining an amplitude for the current waveform will now be described.

The controller 100 calculates an amplitude of the current based on a ratio of the rectified voltage to the first voltage, V(C2) / V(C1), which corresponds the inverse of the coefficient by which the voltage is boosted by the boost converter 300, and which indicates whether the rectified voltage has been boosted (if the rectified voltage is less than the first voltage, i.e. if the ratio is less than 1) by the converter 30. Accordingly, the amplitude of the current can be adapted to whether the AC voltage was sufficiently high or not. The phase and the frequency of the current waveform are then matched to those of the AC voltage.

In a more specific example, the controller 100 can multiply the ratio V(C2) / V(C1) by the rectified voltage V(C2) and a constant value K, which is determined based on a desired value of peak current to be supplied to the motor 50, that is: K = lin_peak/V(C2)_peak. This formula is also equivalent to K = Im_peak/V(C1)_peak because at peak value both are the same. The instant value supplied to the motor will then be: Im_instant = K · V(C2) · V(C2) / (VC1).

Specifically, assuming the electrical circuit to act as a resistive load for the electric power supply module 10, the RMS power to be supplied to the motor, P_rms can be calculated as P_rms = V(C2)_rms $⋅ lin _ rms = V \left(C2\right) _ peak / \sqrt{2} ⋅ lin _ peak / \sqrt{2}$.

Accordingly, the constant value K can be determined from P_rms values as: lin_rms = P_rms/V(C2)_rms. Substituting this into the K formula will give K = lin_peak/V(C2)_peak = P_rms/(V(C2)_rms)², where both the values P_rms and V(C2)_rms are known before an operation of the powered device.

Having obtained the amplitude and the phase for current waveform Im, the controller 100 can control the motor drive 40 to supply the current waveform Im to the motor, and specifically to control the phase currents la, Ib, Ic according to the current Im.

In the example of Figure 4, each of the pairs of switches are turned on in succession to generate a rotating magnetic field by energising different phase windings LA, LB and LC of the motor 50.

The current Im for which a waveform is determined is equal to the sum of the currents la, Ib and Ic flowing through the corresponding pairs of switches of the motor drive 40. Accordingly, the controller 100 therefore controls the switches for each phase of the motor so that, at any time instant, the sum of the currents flowing through all switches of the motor drive 40 (i.e. the sum of the currents la, Ib and Ic and the currents flowing through the other switch in each of the pairs connected to the other terminal of the capacitor C1) corresponds to the amplitude determined for the waveform of Im at that time instant. Thus, the switches of the motor drive 40 are controlled so that the sum of the currents la, Ib and Ic vary with a periodicity corresponding to the frequency and the phase θac of the AC voltage. Details on the commutation sequence of the phase windings of the motor 50 which would become apparent to the skilled person are omitted here for brevity.

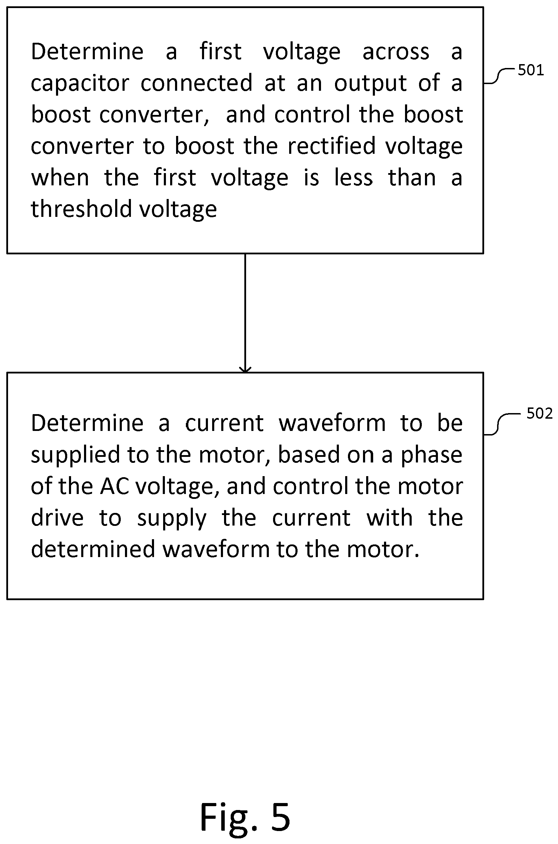

In summary, it will be appreciated from the description above that certain example embodiments perform processing operations to effect a method as shown in Figure 5 that is for controlling a powered device, the powered device comprising an electric power supply module for receiving an alternating current, AC voltage, a rectifier for rectifying the AC voltage, a converter comprising a boost converter, a motor drive, and a motor.

At step 501, a first voltage V(C1) across a capacitor connected at an output of the boost converter is determined, and the boost converter is controlled to boost the rectified voltage when the first voltage is less than a threshold voltage.

At step 502, a current waveform to be supplied to the motor is determined, based on a phase of the AC voltage, and the motor drive is controlled to supply the current with the determined waveform to the motor.

It would be understood that the operations of step 501 (determining the first voltage and controlling the boost converter), and the operations of step 502 (determining the current waveform and controlling the motor drive) can be performed separately and/or independently of each other. Although these operations are shown on Figure 5 to occur in a specific order, this is a non-limiting example. Each of these operation may be performed in parallel, and each may be performed continuously or repeatedly (e.g. periodically) at a same rate or each having a separate rate of repetition.

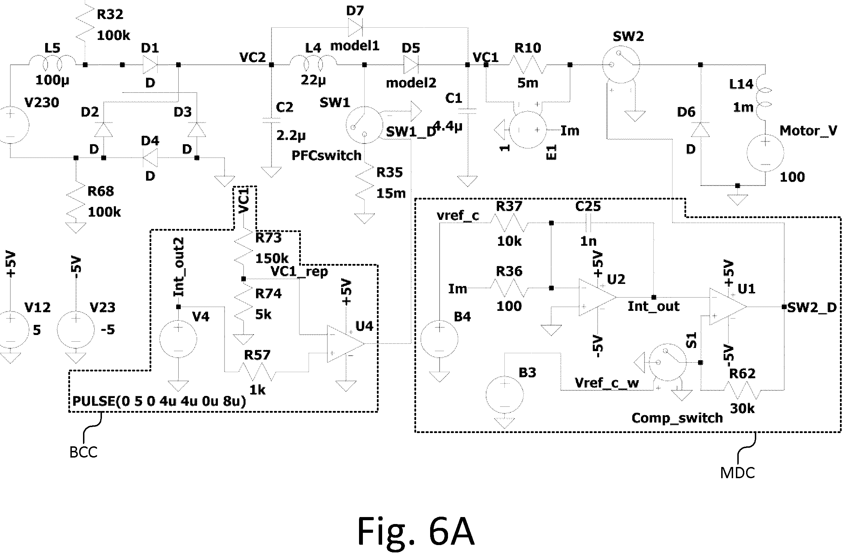

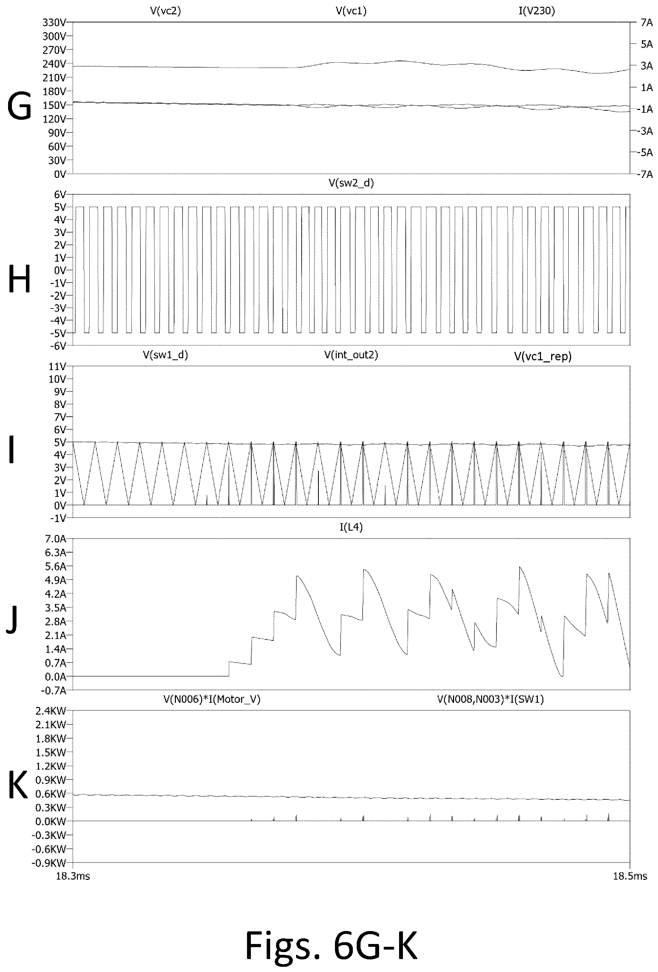

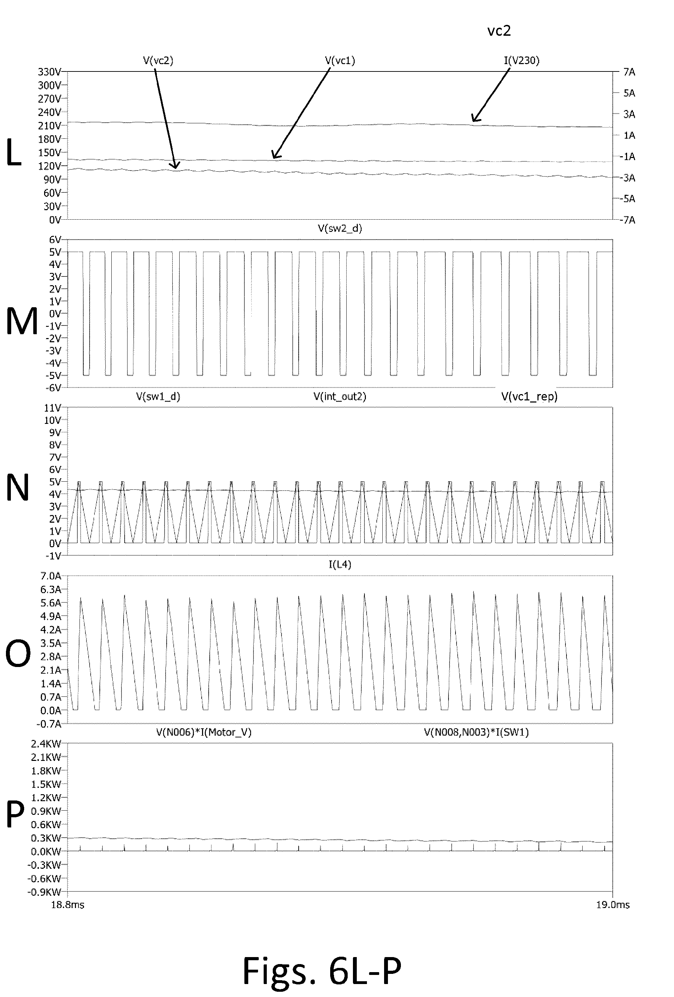

Referring now to Figures 6A to 6F, a simulation of the electrical circuit 1 will be described. For simplicity, only uses one phase is used to simulate the motor.

Figure 6A shows a schematic diagram of a simulation setup for the electrical circuit 1. The circuit is coupled to a power source (V230) providing an AC signal of 230 at 50Hz, to simulate a mains voltage. The capacitor C2 is set to have a capacitance of 2.2µC and the capacitor C1 is set to have a capacitance of 4.4µC. The inductor L4 (corresponding to the capacitor L1 on Figures 1, 2A and 2B) has an inductance of 22µF. The simulated motor is represented as the phase winding L14 and the voltage Motor_V. In the simulation of Figures 6A-6F, the constant K was selected to be 0.011. In other words, the signal vref_c that indicates the target value of instantaneous current supplied to the motor is equal to 0.011 · *V*(*VC*2) · *V*(*VC*2)/*V*(*VC*1), using the terminology shown on Figure 6A.

The bottom-left part of Figure 6A, indicated as BCC (for boost converter control) corresponds to an equivalent circuit for controlling the state of the switch SW1, which is based on the voltage VC1 (i.e. the first voltage). By way of non-limiting example, in the simulation setup of Figure 6A, the first voltage VC1 is brought to a lower value via a voltage divider with the resistors R73 and R74, of 150kΩ and 5kΩ, respectively. This lower value representing VC1 is compared to a first threshold value VC1* of 5V. In the example of 6A, a sawtooth signal with a maximum value equal to the first threshold value is generated and compared to the value representing VC1 to control the state of SW1. The shape of the signal indicating the first threshold voltage VC1* is merely provided as an example for simplicity of the simulation setup. However, any other suitable form of signal may be used instead. In addition, the fact that the first threshold voltage value VC1* is constant in the example of Figure 6A (as the maximum value of the signal is constant) is purely for simplicity, and the invention is not limited in this regard.

The bottom-right part MDC (for motor drive control) corresponds to an equivalent circuit for controlling the motor drive and in particular the state of the switch SW2. More details on an analog implementation of the MDC circuit may be found in the co-pending application titled "Current measurement and control signal generation for a motor drive", the disclosure of which is herein incorporated by reference in its entirety. The BCC and MCC circuits are shown as analog circuits on Figure 6A purely for simplicity of carrying out the simulation. Either or both may be implemented as a digital circuit or a combination of analog and digital elements instead.

The simulated electrical circuit 1 also comprises a bypass circuit, exemplified as the diode D7 that is forward biased between VC2, the output of the rectifier, and VC1, i.e. the first voltage, and thus allowing the boost converter to by bypassed.

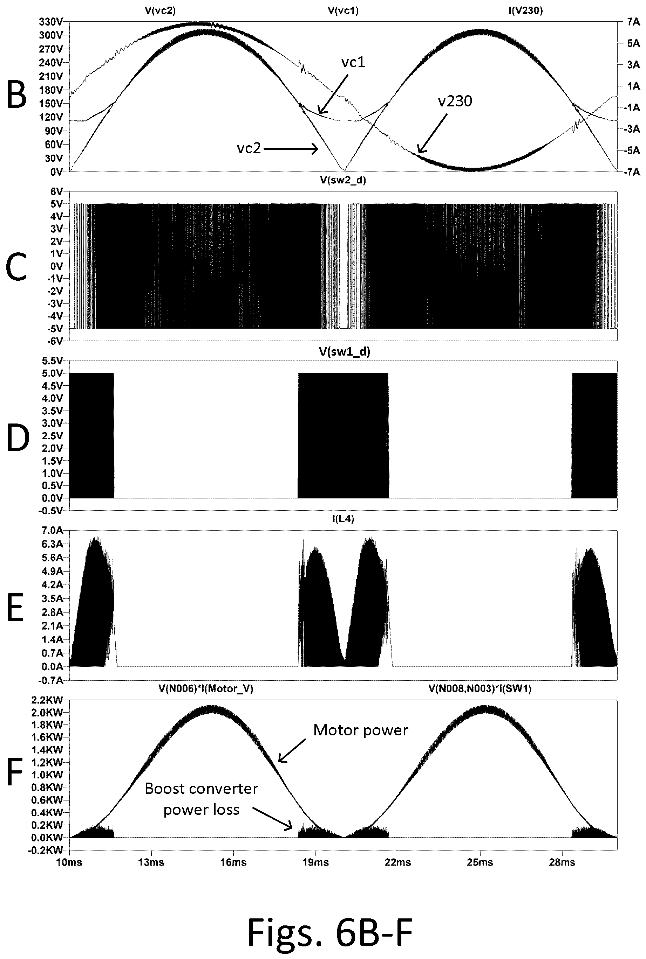

Figures 6B to 6C all represent waveforms of various electrical characteristics of the schematic circuit shown on Figure 6A, and in particular the time period of 10ms to 30ms of the transient analysis with the parameters shown on Figure 6A.

Figure 6B shows the current being drawn from the power source I(V230). The current fluctuates at a frequency of 50Hz, and a phase of the current corresponding to the phase of the voltage supplied, thus indicating the electrical circuit 1 acts as a substantially resistive load thus providing a high power factor. Figure 6B also shows the rectified voltage V(vc2) and the voltage V(vc1) at the output of the boost converter. The waveforms of these voltages on Figure 6B correspond to the waveforms exemplified on Figures 3B and 3C, respectively. As visible from Figure 6B, the first voltage has a pulsating/sinusoidal waveform with a frequency around 100Hz (twice the input frequency), and the first voltage remains high, specifically between about 110V and 305V.

Figure 6C shows the operation of the switch sw2 of the motor drive to supply the current to the motor.

Figure 6D shows the operation of the switch sw1 of the boost converter and specifically the voltage controlling its state. As explained above, the boost converter only operates during certain parts of the cycle, i.e. between about 10ms to 11.5ms, then from about 18.5 to 21.5ms, and again after about 28.5ms. These corresponds to the period of the cycle where the rectified voltage V(vc2) decreases below a threshold of about 150V, as shown on Figure 6B.

Figure 6E shows the current flowing through the inductor L4 of the boost converter, which fluctuates during the part of the cycle when the switch sw1 is controlled to turn on, and remains 0 the rest of the cycle (as the current bypasses the boost converter via the bypass diode D7 instead.

Figure 6F shows the power provided to the motor ("Motor power") as the product of the voltage V(N006) and the current I(Motor_V), where V(N0006) is the voltage at node shown on Figure 6A to be common to the switch SW2, the diode D6 and the inductor L14 representing the phase winding, and I(Motor_V) is the current measured to be flowing through the motor. As with the first voltage V(vc1), the power provided to the motor drive 40 (and thus to the motor 50) also has a pulsating/sinusoidal waveform with a frequency around 100Hz, varying between 0KW and about 2KW.

Figure 6F also shows the power loss occurring in the boost converter ("Boost converter power loss") during the period of time where the switch SW1 is turned on. As explained herein, the current supplied to the motor I(Motor_V) may, if desired, be adjusted to compensate for this loss.

Figures 6G to 6K correspond to the same waveforms as Figures 6B to 6F, respectively, restricted to a 0.2ms time period, from 18.3ms to 18.5ms, i.e. when the boost converter starts to be operated to boost the voltage.

Specifically, as apparent from Figure 6I, the voltage labelled vc1_rep, i.e. the voltage representative of VC1 at the negative input of the operational amplifier U4 gradually decreases over the time period, from being above the first threshold voltage VC1* of 5V, represented on Figure 6I as a triangular sawtooth signal int_out2 having a peak value of 5V to a value slightly below VC1*. As shown on F The voltage vc1_rep becomes lower than the sawtooth signal during the sixth full sawtooth displayed on Figure 6I. This causes a pulse to appear for the signal sw1_d controlling the state of SW1. Correspondingly, as shown on Figure 6J, the current I(L4) flowing through the inductor L4 of the boost converter increases. Then, as the voltage vc1_rep continues to decrease, the time during which it is below the sawtooth signal int_out2 increases and correspondingly, the width of the pulses generated in the signal sw1_d gradually increases as well.

Figures 6L to 6P correspond to the same waveforms as Figures 6B to 6F, respectively, restricted to a 0.2ms time period from 18.8ms to 19ms.

As shown on Figure 6N, the voltage vc1_rep is always lower than the first threshold voltage VC1*. Thus, the width of the pulses in the signal sw1_d, corresponding to the time when the triangular sawtooth signal int_out2 becomes higher than vc1_rep, is greater than on Figure 6I. The current flowing through L4, as shown on Figure 6O, also has a more periodic waveform.

Over the interval of 10ms to 30ms, the average power was measured to be 1.0305KW. Accordingly, even if the instantaneous power fluctuates, the average power may be kept above a minimum level, such as 1KW.

For the same interval of 10ms to 30ms, the average loss in the switch SW1 was found to be 0.473W, thus showing that the switch used in the boost converter does not need to be a high-efficiency switch.

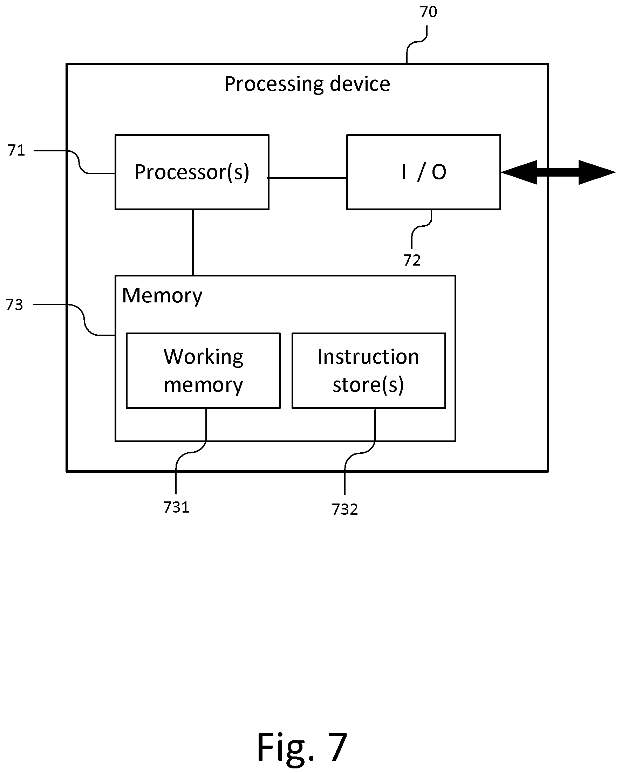

Referring now to Figure 7, an example of a processing device 70, e.g. a general kind of programmable processing apparatus, which may be used to implement the controller 100 (at least in part) will be described.

The programmable processing device 70 comprises one or more processors 71, one or more interfaces (or input/output communication modules) 72, and memory 73 comprising one or more working memories 731, and one or more instruction stores 732 storing computer-readable instructions which can be executed by the one or more processors 71 to perform the processing operations as described herein.

An instruction store 732 is a non-transitory storage medium, which may comprise a non-volatile memory, for example in the form of a read-only-memory (ROM), a flash memory, a magnetic computer storage device (for example a hard disk) or an optical disk, which is pre-loaded with the computer-readable instructions. Alternatively, an instruction store 732 may comprise writeable memory, such as random access memory (RAM) and the computer-readable instructions can be input thereto from a computer program product, such as a non-transitory computer-readable storage medium (for example an optical disk such as a CD-ROM, DVD-ROM, etc.) or a computer-readable signal carrying the computer-readable instructions. The combination of hardware components shown in Figure 5 and computer-readable instructions are configured to implement the functionality of the controller 100.

For example, the processor(s) 71 may, executing computer-readable instruction from the instruction store(s) 732, cause the interface(s) 72 to obtain data relating to the electrical circuit. The processor(s) 71 may process the data to determine the first voltage, and cause the interface 72 to generate instruction(s) for controlling the converter 30 (for example, by controlling a signal generator coupled to the interface 72). Similarly, the processor(s) 71 may determine the current waveform to be supplied to the motor, and cause the interface(s) 72 to generate instruction(s) for controlling the motor drive 40.

In some implementations, the interface(72) may comprise a signal generator (e.g. a voltage and/or current signal generator) for receiving power from a power supply and for generating signals to control the converter 30 and/or the motor drive 40 directly (i.e. without being coupled to an external signal generator).

Data related to the electrical circuit, such as a value of the threshold voltage, etc., whether received via the interface(s) 72, received from another source, or predefined, may be stored in the memory 73.

### Modifications and Variations

Many modifications and variations can be made to the example embodiments described above.

In the example described with reference to Figure 1 above, the motor drive 40 is connected directly to the capacitor C1. In such cases, having a separate buck converter may not be necessary as the motor drive and/or the motor may be used to perform the function of the buck converter, such as reducing the first voltage to a lower level.

However, a buck converter may be provided to decrease the first voltage V(C1) to a third voltage which the motor drive 40 may receive as an input voltage (instead of the first voltage).

In the example described with reference to Figures 1, 2A and 2B above, the bypass circuit comprises the diode D7 for bypassing the boost converter 300 when the first voltage V(C1) is higher than the first threshold voltage. However, the present invention is not limited in this regard. It would be understood that other configuration of the bypass circuit may be implemented instead. For example, a bypass circuit comprising one or more diodes (including the diode D7) or active semiconductor elements (e.g. transistors) in parallel and/or in series may be provided. In particular, the bypass circuit may comprise multiple branches in parallel, where each branch includes diode(s) and/or transistor(s), to reduce the current flowing through each individual branch.

In other examples, the bypass circuit may be omitted to simplify the overall circuit.

In the example described with reference to Figures 2A and 2B above, the controller 100 obtains the first threshold voltage V(C1)* as an input. However, the present invention is not limited in this regard. Instead, the controller 100 may determine the first threshold voltage V(C1)* autonomously.

In other cases, the first threshold voltage V(C1)* may be omitted altogether. For example, Figures 2A and 2B above describe a case where the controller 100 obtains a measure indicating the first voltage V(C1) and compare the first voltage to the first threshold voltage V(C1)*. However, the present invention is not limited in this regard. Instead, controller 100 may obtain the rectified voltage V(C2) and compare the rectified voltage to a second threshold voltage V(C2)*. The controller 100 may determine whether to control the converter 30 to boost the rectified voltage V(C2) based on whether the rectified voltage V(C2) is at least equal to the second threshold voltage V(C2)*, i.e. the controller 100 may control the state of the switch SW1 based on a comparison of the rectified voltage V(C2) and the second threshold voltage V(C2)*, to generate a signal controlling a state of the switch SW1.

As explained for the first threshold voltage V(C1)* above, the second threshold voltage V(C2)* may be determined based on an electric power value that should be provided to the motor 50 for a given operation, such as an average power value (e.g. an RMS power value). The second threshold voltage V(C2)* may be a predetermined value, and/or a constant value. In cases where the powered device is configured to selectively operate at a plurality of available levels for an operation and/or according to one of a plurality of different operations, a respective value for the second threshold voltage V(C2)* corresponding to each desired operation and/or desired level of operation may be determined.

In the example described with reference to Figures 2A and 2B above, the controller 100 uses a different method depending on whether the first voltage V(C1) is lower than a first threshold voltage V(C1)* or the first voltage is higher than the first threshold voltage. However, the present invention is not limited in this regard. Instead, the controller 100 may use a single method (e.g. a same logic or algorithm) in both cases, but the output signal may depend on whether the first voltage V(C1) is lower than a threshold voltage or the first voltage is higher than the threshold voltage. For example, the controller 100 may have a single logic outputting a control signal to control the state of the switch SW1. The control signal may cause the switch SW1 to be ON when the first voltage V(C1) is lower than the first threshold voltage V(C1)*and cause the switch SW1 to be OFF when the first voltage V(C1) is higher than the first threshold voltage V(C1)*.

In some cases, the efficiency of some elements of the circuit, such as the boost converter may be taken into account when controlling the waveform of the current to be supplied to the motor. Specifically, the boost converter has a predetermined efficiency depending on its configuration and the characteristics of the elements used (e.g. the switch SW1, inductor L1 and diode D5). An efficiency of the boost converter may range from around 80% to 95%(meaning a loss of about 5% to 20% of the power input into the boost converter). Based on the predetermined efficiency of the boost converter, the loss in the boost converter at any instant can be determined and converted into a "loss current value". The current to supplied to the motor can be adjusted in accordance with this loss current value (i.e. decreased by the loss current value) to compensate for the efficiency of the boost converter, such that the total current drawn from the AC voltage remains in phase with the AC voltage to improve the power factor.

### List of reference signs

1: electric circuit 1
10: electric power supply module
20: rectifier
D1, D2, D3, D4, D5, D6, D7: diodes
C2: filter capacitor
V(C2): voltage across capacitor C2
30: converter
300: boost converter
L1: inductor
SW1: switch
D5: diode
C1: bus capacitor
V(C1): bus voltage / voltage across capacitor C1
40: motor drive
SW2: switch
D6: diode
50: (electric) motor
Im: (total) motor current
la, Ib, Ic: motor phase currents
LA,LB,LC: motor phase windings
100: controller
L2: motor windings equivalent inductance

## Claims

1. A controller for a powered device that comprises an electric power supply module, a rectifier, a converter, a motor drive and a motor,
the electric power supply module being configured to receive an alternating current, AC, voltage;
the rectifier being configured to rectify the AC voltage;
the converter comprising a boost converter and a capacitor connected at an output of the boost converter, the boost converter being configured to control a first voltage across the capacitor; and
the motor drive being connected in parallel to the capacitor and configured to supply a current to drive the motor;
wherein the controller is configured to:
determine the first voltage and control the boost converter to boost the rectified voltage when the first voltage is less than a first threshold voltage, and
determine a current waveform to be supplied to the motor, based on a phase of the AC voltage, and control the motor drive to supply the current with the determined waveform to the motor.

2. The controller according to claim 1, wherein the controller is configured to control the converter using a different method depending on whether the first voltage is lower than the first threshold voltage or the first voltage is higher than the first threshold voltage.

3. The controller according to claim 2, wherein the boost converter comprises a switch, and the controller is configured to control the switch to remain open when the first voltage is equal to or greater than the first threshold voltage.

4. The controller according to claim 2 or 3, wherein the controller is configured to control the boost converter to boost the rectified voltage when the rectified voltage is lower than the second threshold voltage.

5. The controller according to any of claims 1 to 4, wherein the controller is configured to determine the current waveform using a different method depending on whether the rectified voltage is lower than a second threshold voltage or the rectified voltage is equal to or higher than the second threshold voltage.

6. The controller according to claim 5, wherein the second threshold voltage is based on a constant voltage value.

7. The controller according to any of claims 1 to 6, wherein the controller is configured to determine a phase for the current waveform that is substantially equal to the phase of the AC voltage.

8. The controller according to claim 7, wherein the controller is configured to determine the phase for the current waveform to have a phase difference with the AC voltage less than a predetermined threshold, wherein preferably the predetermined threshold is based on at least one of a capacitance value of the capacitor, a minimum power to be output by the motor, and a limit for a current harmonic.

9. The controller according to any of claims 1 to 8, wherein the controller is configured to determine the current waveform based on the rectified voltage and the first voltage.

10. The controller according to claim 9, wherein the controller is configured to determine an amplitude for the current waveform to be supplied based on a ratio of the rectified voltage to the first voltage.

11. The controller according to claim 10, wherein the controller is configured to determine the amplitude for the current waveform to be proportional to the rectified voltage when the first voltage is substantially equal to the rectified voltage.

12. The controller according to claim 10 or 11, wherein the controller is configured to determine the amplitude I for the current waveform based on the equation: $I = K ⋅ V \left(C2\right) ⋅ V \left(C2\right) / V \left(C1\right)$ where V(C2) is the rectified voltage, V(C1) is the first voltage, and K is a constant determined based on a desired root mean square value or a peak value for the current to be supplied to the motor.

13. The controller according to any one of claims 1 to 12, wherein the converter further comprises a buck converter connected between the capacitor and the motor drive, and
wherein the controller is configured to operate the buck converter to convert the first voltage to a third voltage, wherein the motor drive is configured to supply the current to the motor based on the third voltage.

14. The controller according to any of claims 1 to 13, wherein the electric motor comprises a plurality of phases, and wherein the controller is configured to determine a current waveform to be supplied to at least one phase, and preferably to determine a respective current waveform for each phase of the electric motor.

15. A circuit for controlling a motor , the circuit comprising an electric power supply module, a rectifier, a converter, a motor drive and the controller according to any of claims 1 to 14.

16. The circuit according to claim 15, further comprising a bypass circuit connected in parallel to the boost converter, wherein the bypass circuit comprises at least one of a diode and an active semiconductor element for allowing electric current flowing from the rectifier towards the motor drive to bypass the boost converter when the first voltage is higher than the threshold voltage.

17. A powered device comprising the circuit according to claim 15 or 16 and a motor connected to the motor drive of the circuit, wherein the circuit is configured to supply current to the motor with the determined current waveform.
